# EUROPÄISCHE PATENTSCHRIFT

(11) **EP 3 219 890 B1**
(45) Veröffentlichungstag und Bekanntmachung des Hinweises auf die Patenterteilung: **22.07.2020**
(21) Anmeldenummer: 17159084.7
(22) Anmeldetag: 03.03.2017
(51) Int. Cl.: E05C 1/06, E05B 15/00, B62D 33/037, E05B 83/42, E05B 15/04

(54) **RIEGELSPANNVERSCHLUSS FÜR TÜREN ODER BORDWÄNDE VON NUTZFAHRZEUGAUFBAUTEN**
BAR LOCK FOR DOORS OR SIDES OF UTILITY VEHICLE SUPERSTRUCTURES
FERMETURE DE SERRAGE POUR LOQUET POUR PORTES OU HAYONS DE CARROSSERIES DE VÉHICULE UTILITAIRE

(30) Priorität: 17.03.2016 DE 102016104999
(43) Veröffentlichungstag der Anmeldung: 20.09.2017
(73) Patentinhaber: F. Hesterberg & Söhne GmbH & Co. KG, 58256 Ennepetal (DE)
(72) Erfinder: Krüger, Friedrich, 58256 Ennepetal (DE)
(74) Vertreter: Christophersen Patentanwälte

(56) Entgegenhaltungen:
- EP-A1- 0 302 270
- EP-B1- 0 196 080
- DE-A1- 4 108 078
- DE-A1-102006 043 583
- DE-T2- 69 300 834
- GB-A- 353 134
- US-A1- 2012 235 425

## Beschreibung

Die Erfindung betrifft einen Riegelspannverschluss für Türen oder Bordwände von Nutzfahrzeugaufbauten, mit einem Gehäuse, einem Riegel, der sich aus einem der formschlüssigen Verriegelung der Tür bzw. Bordwand dienenden Eingriffsteil und einem in einem an dem Gehäuse ausgebildeten Kanal längsgeführten Riegelstumpf zusammensetzt, einem schwenkbar an dem Gehäuse gelagerten Handhebel, welcher in seiner Schließstellung in dem Gehäuse ruht und in seiner Offenstellung gegenüber der Schließstellung verschwenkt ist, einem über ein erstes Drehlager mit dem Riegelstumpf und über ein zweites Drehlager mit dem Handhebel verbundenen Gelenkhebel, und einem den Handhebel in dessen maximaler Offenstellung arretierenden Mechanismus, wobei Bestandteil des Mechanismus eine Druckfeder ist, die mit ihrem ersten Ende gegen das Gehäuse und mit ihrem zweiten Ende gegen den Gelenkhebel abgestützt ist.

Derartige Riegelspannverschlüsse finden Verwendung bei Aufbauten von Lastkraftfahrzeugen, und zwar insbesondere zum Verriegeln einer abklappbaren Bordwand an einem Bauteil des Fahrzeugaufbaus, z. B. an einer Runge. Bekannt ist ein solcher Riegelspannverschluss z. B. aus der EP 0 196 080 B1. Als Gehäuse für den Riegelspannverschluss dient eine bündig in die Bordwand eingesetzte Einbauwanne. Diese setzt sich zusammen aus einer den Handgriff eines Verschlusshebels in dessen Schließstellung aufnehmenden Mulde und einem sich an die Mulde anschließenden Kanal, in dem längsbeweglich ein Riegelstumpf angeordnet ist. Der Riegelstumpf ist der eine Bestandteil eines Riegels, dessen zweiter Bestandteil das die eigentliche Verriegelung bewirkende Eingriffsteil ist. Das Spannen und Lösen des Riegels erfolgt durch den auf einer gehäusefesten Achse schwenkbaren Verschlusshebel. Die Kopplung zwischen Verschlusshebel und Riegelstumpf erfolgt über einen Gelenkhebel, der über ein erstes Drehlager mit dem Verschlusshebel und über ein zweites Drehlager mit dem Riegelstumpf verbunden ist. Ein Mechanismus aus zwei Zugfedern sorgt dafür, dass der Handhebel in der Offenstellung des Verschlusses in seiner nahezu voll umgelegten Stellung verharrt, um so ein Baumeln des Handhebels mit der Gefahr von Beschädigungen an Fahrzeugteilen zu verhindern.

Wenngleich hinsichtlich seiner Grundfunktion überzeugend, ist der Riegelspannverschluss nach der EP 0 196 080 B1 verbesserungswürdig. Denn zur Unterbringung des erwähnten Mechanismus weist der Riegelspannverschluss eine insgesamt relativ große Länge auf. Außerdem sind, soll ein seitliches Verkanten des Riegelstumpfs vermieden werden, gleich zwei Zugfedern erforderlich, um in der Offenstellung des Verschlusses den Handhebel dazu zu bringen, in seiner nahezu voll umgelegten Stellung zu verharren. Außerdem liegen die beiden Zugfedern weitgehend offen in dem Kanal des Gehäuses, wodurch Manipulationen an den Federn möglich sind.

Der Erfindung liegt die Aufgabe zugrunde, den Riegelspannverschluss unter Wahrung von dessen Funktionalität so weiterzuentwickeln, dass sich dessen Baulänge verringern lässt und Manipulationen von außen erschwert werden.

Zur Lösung dieser Aufgabe wird ein Riegelspannverschluss mit den Merkmalen des Patentanspruchs 1 vorgeschlagen.

Der Mechanismus, welcher dafür sorgt, dass in der Offenstellung des Verschlusses der Handhebel in seiner maximal umgelegten Stellung verharrt, umfasst demgemäß eine Druckfeder, die mit ihrem ersten Ende gegen das Gehäuse und mit ihrem zweiten Ende gegen den Gelenkhebel abgestützt ist.

Durch diese Anordnung der Druckfeder lässt sich diese platzsparend und unauffällig unterbringen, insbesondere an der Rückseite des Gelenkhebels, wozu dieser z. B. eine zur teilweisen Aufnahme der Druckfeder geeignete Aussparung an seiner Rückseite aufweisen kann. Da eine gewisse Größe des Gelenkhebels aufgrund der Schließkinematik notwendig ist, erfordert die dort angeordnete Druckfeder keinen zusätzlichen Bauraum. Auf die bisher verwendete Federanordnung aus zwei in dem Kanal des Gehäuses offen angeordnete Zugfedern kann verzichtet werden. Dies schafft die Voraussetzung dafür, diesen Kanal deutlich kürzer zu gestalten, und so die Gesamtlänge des Riegelspannverschlusses zu reduzieren.

Vorteilhafte Ausgestaltungen des Riegelspannverschlusses sind in den Unteransprüchen angegeben.

Erfindungsgemäß befindet sich die Federabstützung für das erste Ende der Druckfeder an einer am Boden des Kanals einstückig angeformten Lasche. Die Lasche ist vorzugsweise so angeordnet, dass die Federabstützung im Vergleich zum Boden des Kanals zu dem Kanalinneren hin vorsteht.

Mit einer weiteren Ausgestaltung wird vorgeschlagen, dass die Federabstützung zu der Achse des ersten Drehlagers hin gerichtet ist.

Und weiterhin erfindungsgemäß weist die Lasche einen ersten Längsabschnitt, an dessen Ende sich die Federabstützung für das erste Ende der Druckfeder befindet, und einen im Vergleich schmaleren zweiten Längsabschnitt auf welcher sich innen längs der Druckfeder erstreckt. Der innerhalb der Druckfeder angeordnete Längsabschnitt der Lasche dient dazu, die auf Druck belastete Feder gegen ein seitliches Ausbäumen zu stabilisieren.

Ebenfalls mit dem Ziel, ein seitliches Ausbäumen der Druckfeder zu verhindern, kann sich die Federabstützung für das andere, also das zweite Ende der Druckfeder an einem verdickten Endabschnitt einer Hülse befinden, die längsverschieblich auf der Lasche angeordnet ist. In diesem Fall dient die zylindrische Außenseite dieser Hülse dazu, die Druckfeder innen radial abzustützen, und so ein seitliches Wegknicken der Druckfeder zu verhindern.

Bei Verwendung der zusätzlichen Hülse liegt deren Endabschnitt gegen eine Ausnehmung in dem Gelenkhebel an. Der Endabschnitt kann z. B. die Gestalt eines abgerundeten Kopfes aufweisen, so dass sich stets eine reibungsarme Abstützung an der Ausnehmung des Gelenkhebels einstellt.

Zwei Ausführungsbeispiele der Erfindung werden nachfolgend anhand der zugehörigen Zeichnungen erläutert. Darin zeigen:
- Fig. 1: in perspektivischer Ansicht den Ausschnitt einer Lkw-Bordwand mit zwei Riegelspannverschlüssen;
- Fig. 2: eine Heckansicht auf den Lkw, wobei die Bordwand auf der linken Fahrzeugseite nach unten abgeklappt wiedergegeben ist;
- Fig. 3: in perspektivischer Ansicht einen Riegelspannverschluss in Offenstellung;
- Fig. 4: den Riegelspannverschluss nach Fig. 3 in seiner Schließstellung;
- Fig. 5: eine perspektivische Ansicht der Innenseite des Riegelspannverschlusses;
- Fig. 6: eine Seitenansicht des Riegelspannverschlusses in dessen Offenstellung;
- Fig. 7: eine Draufsicht auf den Riegelspannverschluss nach Fig. 6;
- Fig. 8: eine Seitenansicht des Riegelspannverschlusses in dessen Schließstellung;
- Fig. 9: eine Draufsicht auf den Riegelspannverschluss nach Fig. 8;
- Fig. 10: einen Längsschnitt entlang der Linie X-X der Fig. 7;
- Fig. 10a: den in Fig. 10 strichpunktierten Bereich als vergrößerter Ausschnitt;
- Fig. 11: einen Längsschnitt entlang der Linie XI-XI der Fig. 9;
- Fig. 11a: den in Fig. 11 strichpunktierten Bereich als vergrößerter Ausschnitt;
- Fig. 12: eine Draufsicht nur auf das Gehäuse und den Boden des am Gehäuse ausgebildeten Kanals;
- Fig. 13: eine zweite Ausführungsform des Riegelspannverschlusses in einem Längsschnitt und
- Fig. 13a: den in Fig. 12 strichpunktierten Bereich als vergrößerter Ausschnitt.

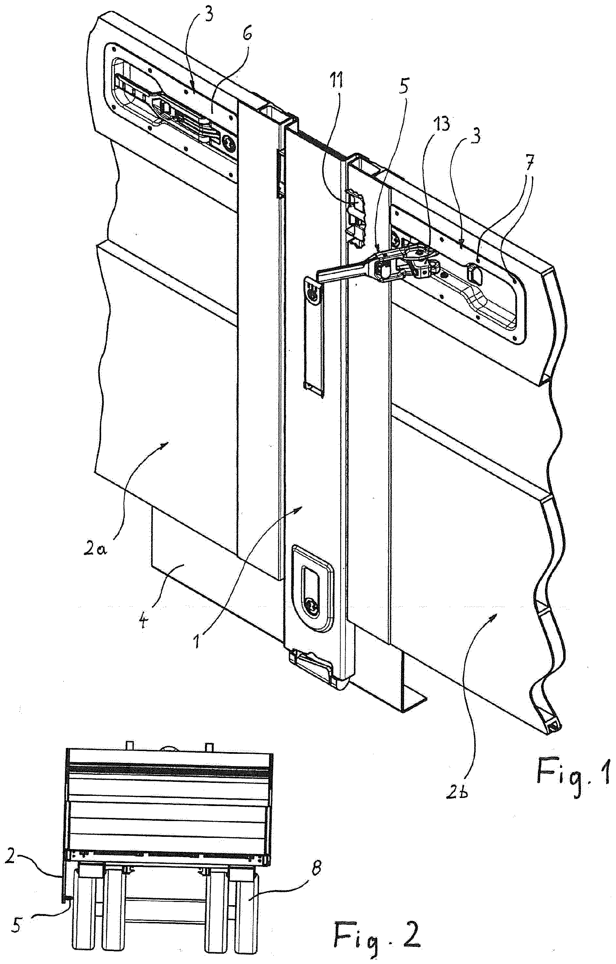

Die Fig. 1 zeigt einen Ausschnitt aus einem Lkw-Aufbau mit einer vertikalen Runge 1, an der einseitig oder wie dargestellt zu beiden Seiten Bordwände 2a, 2b verriegelbar sind. Die Bordwände 2a, 2b sind um horizontal liegende, am Ladeboden 4 angeordnete Achsen nach unten abklappbar, um so an die dahinter angeordnete Ladefläche des Nutzfahrzeugs zu gelangen. Die Verriegelung an der Runge 1 erfolgt jeweils mittels Riegelspannverschlüssen 3.

Der Riegelspannverschluss 3 der Bordwand 2a ist in Fig. 1 in seiner verriegelten Stellung dargestellt, wohingegen der Riegelspannverschluss 3 der anderen Bordwand 2b maximal geöffnet ist, was an dem um mehr als 90° und vorzugsweise um 120° bis 160° nach außen aufgeschwenkten Handhebel 5 des Riegelspannverschlusses erkennbar ist.

Jeder Riegelspannverschluss 3 verfügt über ein Gehäuse 6 in Gestalt einer in eine Aussparung in der Bordwand 2a, 2b eingesetzten Einbauwanne, sowie über verschiedene weitere Elemente. Über Nietlöcher 7 erfolgt das Vernieten des auf seiner Außenseite flach und nahezu bündig mit der Bordwand 2a, 2b gestalteten Gehäuses 6 an der Bordwand.

Die Fig. 2 lässt in einer Heckansicht auf das Nutzfahrzeug oder den Nutzfahrzeuganhänger erkennen, wie hier die auf der rechten Fahrzeugseite angeordnete Bordwand hochgeklappt ist, wohingegen die auf der linken Fahrzeugseite angeordnete Bordwand 2 abgeklappt ist. Der Handhebel 5 erstreckt sich dabei etwas zu dem Fahrzeug hin. Dies kann problematisch werden, wenn sich dort empfindliche Fahrzeugteile befinden, z. B. der Reifen 8 des Fahrzeugs. Um hier, zumal Bordwände nach ihrer Entriegelung häufig in freiem Fall abgelassen werden, Schäden zu verhindern, sollte der Handhebel 5 seine maximale Offenstellung einnehmen und auch beibehalten. In dieser Offenstellung ist der Handhebel um 120° bis 160° gegenüber seiner Schließstellung geöffnet. In einer solchen Stellung ist die Gefahr von Beschädigungen deutlich reduziert, auch wenn natürlich eine Schließstellung des Handhebels insoweit optimal wäre. Aus Gründen der Bequemlichkeit neigen die Benutzer allerdings dazu, die Riegelspannverschlüsse nach dem Öffnen der Bordwand nicht zu verschließen, da dies zur Folge hätte, beim späteren Wiederverschließen der Bordwand zunächst die Spannverschlüsse öffnen zu müssen, was einen zusätzlichen Arbeitsschritt bzw. Aufwand bedeutet.

Der Mechanismus zum Verriegeln der Bordwand besteht im Wesentlichen aus dem Handhebel 5, welcher an seinem freien Ende in einem Handgriff 9 ausläuft, einem in dem Gehäuse 6 längsverschieblichen Riegel 10 sowie einem Gelenkhebel 13.

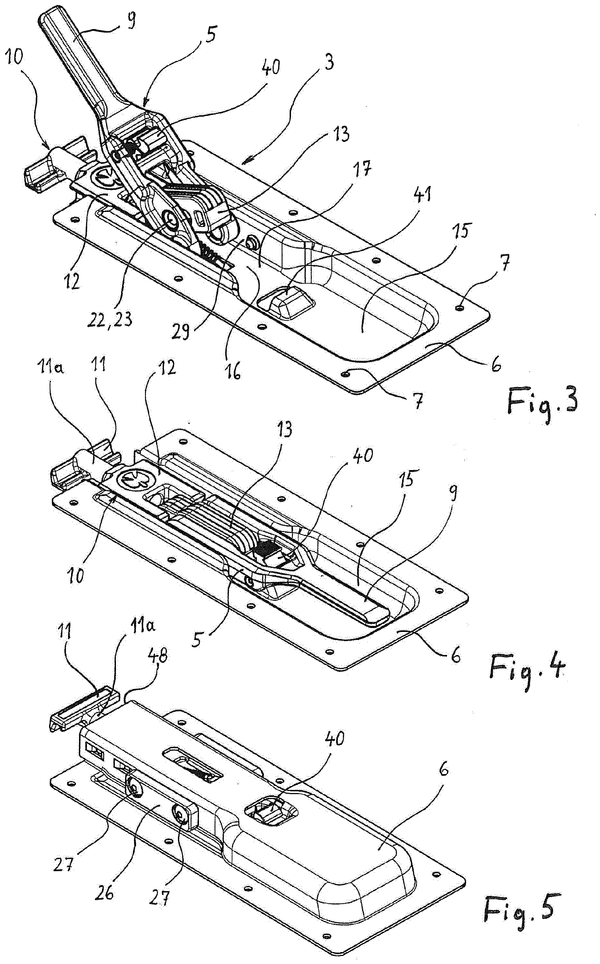

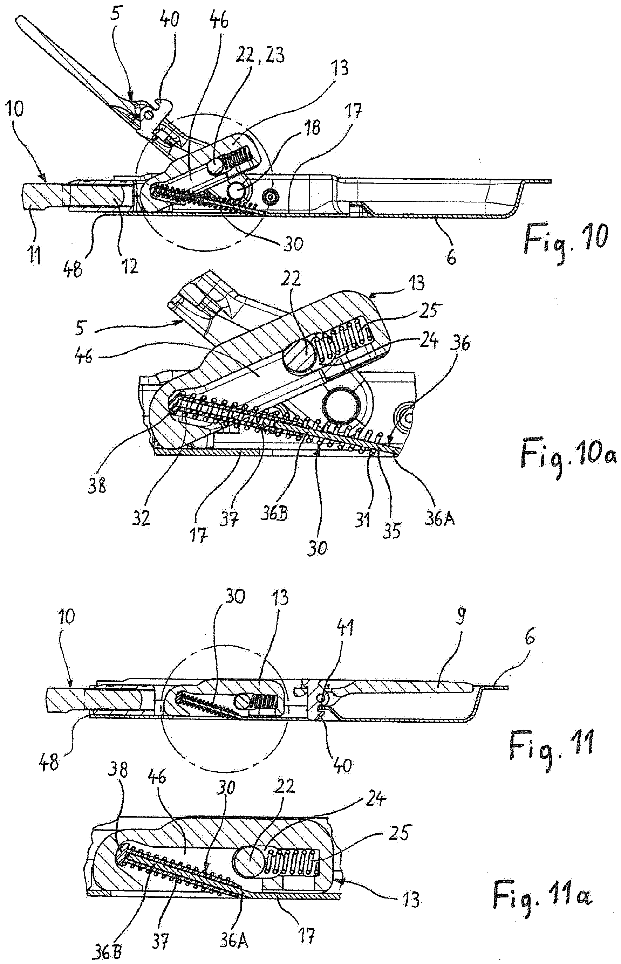

Der Handhebel 5 ist mit seinem einen Ende in dem Gehäuse 6 schwenkbar gelagert, wozu er auf gehäusefest angeordneten Achsen 18 gelagert ist (Fig. 10). In eingeklapptem Zustand des Hebels, also in der z. B. in Fig. 4 wiedergegebenen Schließstellung, befindet sich der das Ende des Handhebels 5 bildende Handgriff 9 in einer breiten Mulde 15 des aus einem tiefgezogenen Metallblech bestehenden Gehäuses 6, wodurch der Handgriff 9 von Hand gut greifbar ist. Mit seiner übrigen Länge befindet sich der geschlossene Handhebel 5 in einem im Vergleich zu der Mulde 15 schmaleren Kanal 16 des Gehäuses 6. Der Kanal 16 bildet dabei die schmalere Fortsetzung der Mulde 15. Auch der Kanal 16 ist durch entsprechendes Tiefziehen der als Blechformteil gestalteten Einbauwanne 6 hergestellt.

Der Riegel 10 des Riegelspannverschlusses setzt sich aus einem Eingriffsteil 11 und einem in dem Kanal 16 angeordneten und darin längsgeführten Riegelstumpf 12 zusammen. Das Eingriffsteil 11 ist jenes Element, welches sich durch Formschluss hinter einer entsprechenden Falle der Runge 1 (Fig. 1) verriegeln lässt.

Über eine kurze Stange 11a ist das Eingriffsteil 11 mit dem Riegelstumpf 12 verbunden. Zum Einstellen der wirksamen Länge des Riegels 10 besteht zwischen dessen Eingriffsteil 11 und dem Riegelstumpf 12 eine Gewindeverbindung. Hierzu ist die Stange 11a mit einem Gewinde versehen, welches in einem Innengewinde in dem Riegelstumpf 12 verschraubbar ist. Durch Verdrehen des Eingriffsteils 11 in Bezug auf den Riegelstumpf 12 lässt sich daher die wirksame Länge des Riegels 10 einstellen.

Von den Elementen des Riegels 10 befindet sich nur der Riegelstumpf 12 zumindest teilweise in dem Kanal 16 des Gehäuses 6, wohingegen sich das Eingriffsteil 11 zwecks Verriegelung an der Runge außerhalb des Kanals 16 befindet.

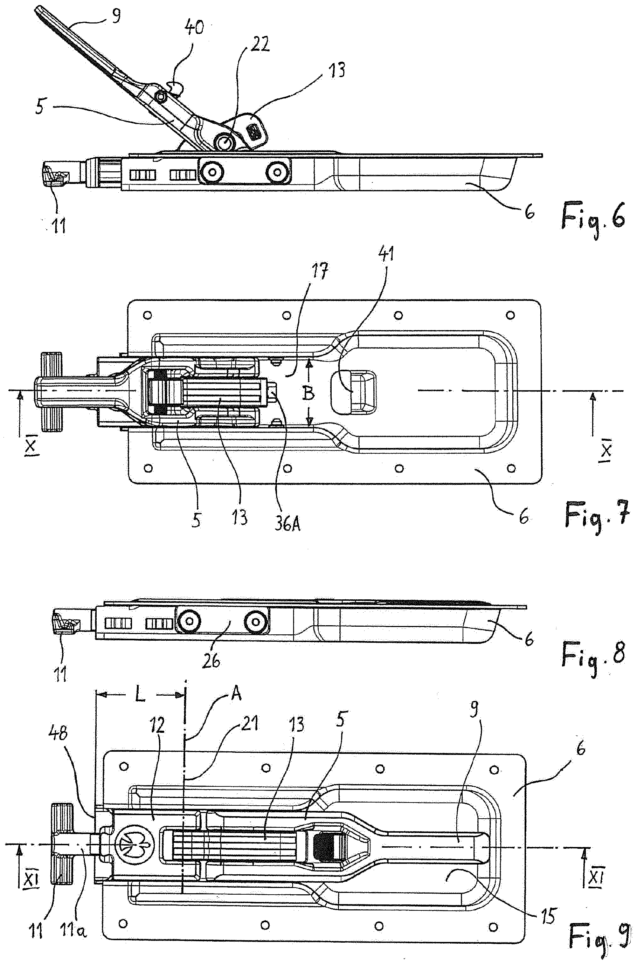

Vor allem Fig. 9 lässt erkennen, dass sowohl der Riegelstumpf 12 als auch der Handhebel 5 in ihren einander zugewandten Längsabschnitten jeweils gabelförmig gestaltet sind. In dem so gebildeten Freiraum befindet sich der im Vergleich schmalere, also schmaler als der Riegelstumpf 12 und schmaler als der Handhebel 5 ausgebildete Gelenkhebel 13.

Der Gelenkhebel 13 ist über ein auf der Achse 21 (Fig. 9) angeordnetes, erstes Drehlager mit dem Riegelstumpf 12 verbunden, und über ein zweites Drehlager 22 mit dem Handhebel 5.

Als zweites Drehlager 22 dient hier ein Bolzen 23, der sowohl Bohrungen in dem in diesem Bereich gabelförmigen Handhebel 5 durchdringt, als auch eine Öffnung in dem Gelenkhebel 13. Diese Öffnung in dem Gelenkhebel 13 ist als ein Langloch 24 gestaltet (Fig. 10a), wodurch für den Bolzen 23 und damit für das zweite Drehlager 22 ein gewisses Spiel in Längsrichtung des Gelenkhebels 13 besteht. Eine Druckfeder 25 ist einerseits am Boden einer Sacklochbohrung des Gelenkhebels 13, und andererseits an dem Bolzen 23 abgestützt. Auf diese Weise übt die Feder 25 in Verriegelungsstellung eine Druckkraft auf den Gelenkhebel 13 aus, welche bestrebt ist den Riegel 10 in das Gehäuse 6 hinein zu ziehen.

Die relative Anordnung des ersten Drehlagers 21, des zweiten Drehlagers 22 und jener Achse 18, welche den Handhebel 5 in dem Gehäuse 6 lagert, ist dergestalt, dass sich in der Schließstellung, also bei angelegtem Handhebel 5 gemäß den Figuren 4, 8 und 9, eine Übertotpunktsicherung einstellt. Hierbei befindet sich die Achse 18 oberhalb einer gedachten Verbindungsgerade zwischen der Achse 21 des ersten Drehlagers und dem zweiten Drehlager 22.

Das erste Drehlager besteht aus zwei auf der Achse 21 angeordneten Achsstummeln, welche zu beiden Seiten an dem im Übrigen schmalen Gelenkhebel 13 angeordnet sind, sowie aus die Achsstummel umschließenden Lagerschalen an dem Riegelstumpf 12. Um Teile und damit Produktionskosten einzusparen, sind die beiden kurzen Achsstummel einstückiger Bestandteil des schmalen Gelenkhebels 13, d. h. daran unmittelbar angeformt.

Zum Zusammensetzen des ersten Drehlagers 21 muss daher das riegelseitige Ende des Gelenkhebels 13 von unten her in den Riegelstumpf 12 hinein bewegt werden, wobei die Achsstummel des Gelenkhebels 13 in die nach unten offene Ausnehmung des Riegelstumpfes 12 hinein gelangen. Auf diese Weise ist die Drehkoppelung von Gelenkhebel 13 und Riegelstumpf 12 erreicht. Werden beide Teile dann in den Kanal 16 der Einbauwanne 6 eingesetzt, lässt sich der Gelenkhebel 13 nicht mehr von dem Riegelstumpf 12 trennen. Zugleich ist die erzielte gelenkige Verbindung besonders einfach, da das erste Drehlager 21 ausschließlich durch die entsprechende Gestaltung von Riegelstumpf 12 und Gelenkhebel 13 verwirklicht ist, ohne separate Dreh- oder Lagerteile.

Um den Riegelstumpf 12 so in dem Kanal 16 zu führen, dass der Riegelstumpf nicht nach außen aus dem Kanal 16 austreten kann, sind die beiden Kanalseitenwände 29 mit geeigneten Führungsflächen versehen. Diese erstrecken sich parallel zu dem Boden 17 des Kanals 16, und befinden sich an Materialverformungen der Kanalseitenwände 29. Diese Materialverformungen sind nach innen in den Kanal 16 hinein ausgestemmte Wandbereiche der Kanalseitenwände 29. Die Herstellung der Führungsflächen erfolgt daher kostengünstig im Rahmen der Kaltverformung des Gehäuses 6.

Korrespondierend zu den Führungsflächen an den Kanalseitenwänden 29 verfügt der Riegelstumpf 12 über entsprechende Führungsflächen. Diese befinden sich hier an Nuten in den Seitenwänden des Riegelstumpfs 12.

Infolge der Längsführung entlang des Kanals 16 mittels der an den Seitenwandbereichen ausgebildeten Führungen ist die Außenseite des Riegelstumpfes 12 frei von Führungselementen, der Kanal 16 der Einbauwanne 6 ist also nach außen hin offen.

Die gehäusefest angeordnete Achse 18 zur Lagerung des Handhebels 5 setzt sich aus zwei getrennten Achszapfen zusammen. Jeder Achszapfen ist durch Verschweißen auf einer kleinen Trägerplatte 26 (Fig. 5) befestigt. Die Trägerplatten 26 sind derart an der Kanalaußenwand befestigt, dass die Achszapfen durch eine Öffnung in dieser Wand hindurch in den Kanal 16 hineinragen. Auf dem Achszapfen sind dann die jeweiligen Gabelschenkel des an diesem Ende gabelförmigen Handhebels 5 schwenkbar gelagert.

Die die Achszapfen tragenden Trägerplatten 26 sind mit Hilfe zweier Niete 27 außen an der Kanalseitenwand befestigt (Fig. 5). Die beiden Niete 27 befinden sich beiderseits des in ihrer Mitte angeordneten Achszapfens.

Ein unbeabsichtigtes Öffnen des Handhebels wird bereits durch die beschriebene Übertotpunktsicherung verhindert. Als zusätzliche Sicherungsmaßnahme ist der Handhebel 5 mit einem federbelasteten Sperrhebel 40 versehen. Dieser ist im Bereich des Handgriffs 9 für den Daumen erreichbar gelagert, und hintergreift im Sperrzustand eine Sperrlasche 41 am Boden 17 des Kanals 16.

Wie vor allem die Figuren 10 und 10a zeigen, ist eine Druckfeder 30 mit ihrem ersten Ende 31 gegenüber dem Boden des Kanals 16, und mit ihrem zweiten Ende 32 gegenüber dem Gelenkhebel 13 abgestützt. Die Feder 30 sorgt dafür, dass in der in Fig. 10 und 10a wiedergegebenen Offenstellung des Verschlusses der Handhebel 5 in seiner nahezu voll umgelegten Stellung verharrt, in der er z. B. um 140° gegenüber seiner Schließstellung verschwenkt ist. Auf diese Weise wird bei geöffnetem Verschluss ein unkontrolliertes Baumeln oder Schlagen des Handhebels 5 mit der Gefahr von Beschädigungen an Fahrzeugteilen verhindert, z. B. einer Beschädigung des unterhalb angeordneten Fahrzeugreifens des Nutzfahrzeugs.

Für die gehäuseseitige Festlegung der Druckfeder 30 ist als Bestandteil des Gehäuses 6 eine erste Federabstützung 35 vorhanden. Die erste Federabstützung 35 befindet sich hier an einer aus dem Boden 17 des Kanals 16 einstückig geformten Lasche 36. Die Lasche 36 ist aus dem Boden 17 z. B. durch Stanzen und anschließendes Verformen hergestellt. Wie Fig. 10a erkennen lässt, ist die Lasche 36 so angeordnet und gestaltet, dass die daran ausgebildete Federabstützung 35 im Vergleich zum Niveau des Bodens 17 etwas zum Kanalinneren hin vorsteht. Die Federabstützung 35 ist zu der Achse 21, also zu dem ersten Drehlager hin, gerichtet.

Die Lasche 36 weist aufeinanderfolgend zwei Längsabschnitte 36A, 36B auf. Der erste Längsabschnitt 36A ist unmittelbar mit dem flachen Boden 17 des Gehäuses 6 verbunden. Der erste Längsabschnitt 36A ist von solcher Breite, dass sich an seinem Ende die Feder 30 sicher abzustützen vermag. Der zweite, im Vergleich schmalere Längsabschnitt 36B der Lasche erstreckt sich innen längs der Druckfeder 30. Er dient dazu, die auf Druck belastete Feder 30 von innen her gegen ein seitliches Ausbäumen oder Ausknicken zu stabilisieren.

Bei der ersten hier beschriebenen Ausführungsform dient der schmalere Längsabschnitt 36B der Lasche 36 außerdem der längsverschieblichen Führung einer Hülse 37, die sich zwischen diesem Längsabschnitt 36B und der Innenseite der Feder 30 befindet. Die Hülse 37 stützt und stabilisiert die Innenwandung der Feder 30, so dass diese nicht seitlich abknicken oder sich seitlich ausbäumen kann.

Zum Bilden der Federabstützung 39 für das andere Federende 32 ist die Hülse 37 pilzförmig gestaltet mit einem radial erweiterten Endabschnitt 38. An diesem stützt sich die Druckfeder 30 mit ihrem zweiten Ende 32 ab. Außen hat der Endabschnitt 38 vorzugsweise die Gestalt eines abgerundeten Kopfes, wodurch sich der Endabschnitt 38 in einer entsprechend abgerundeten Mulde 45 des Gelenkhebels 13 abstützt, mit der der Gelenkhebel 13 versehen ist.

Gemäß Fig. 11 und Fig. 11a erfordert die Druckfeder 30 keinen zusätzlichen Platzbedarf, vielmehr findet sie Platz in einer Ausnehmung 46, mit der der Gelenkhebel 13 an seiner dem Kanalboden 17 zugewandten Rückseite versehen ist. Die Mulde 45, in der sich die Druckfeder 30 mit ihrem einen Ende 32 abstützt, ist Teil dieser Ausnehmung 46.

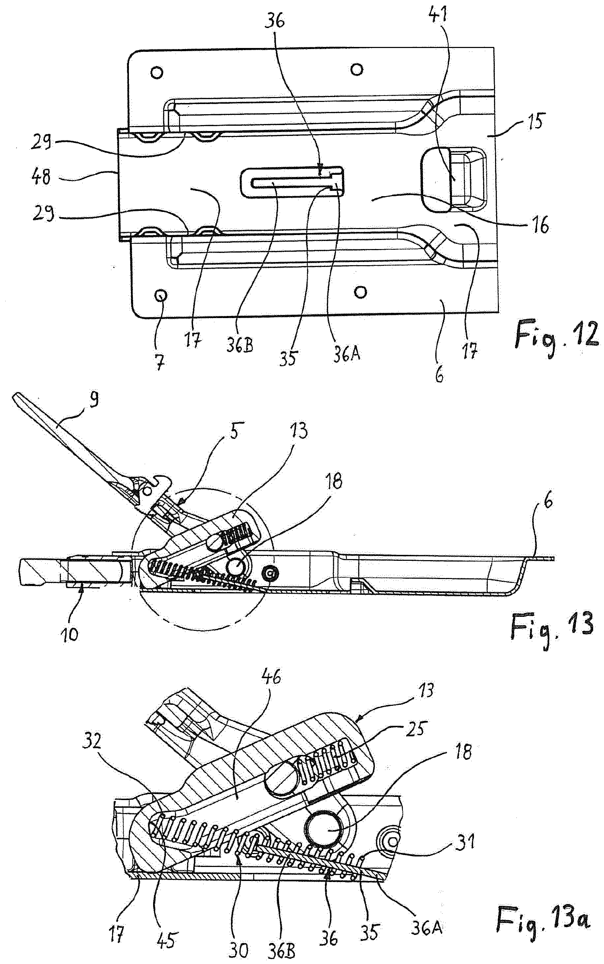

Die Figuren 13 und 13a zeigen eine zweite Ausführungsform des Riegelspannverschlusses. Bei dieser Ausführungsform fehlt die Hülse 37 der ersten Ausführungsform. Die Druckfeder 30 stützt sich daher mit ihrem zweiten Ende 32 unmittelbar in der Mulde 45 des Gelenkhebels 13 ab.

Alle Ausführungsformen haben den Vorteil einer kompakten, kurzen Baulänge des Spannverschlusses. Denn der Riegelstumpf 12 und damit der diesen seitlich führende Kanal 16 kann relativ kurz gestaltet sein, wodurch sich auch die Gesamtlänge des Riegelspannverschlusses reduziert. Hierzu ist in der Fig. 9 bezeichnet, dass in der Schließstellung des Riegels 10 das Verhältnis aus
- dem Abstand L zwischen der Achse 21 des ersten Drehlagers und der dem Eingriffsteil 11 nächstliegenden Kante 48 am Boden 17 des Kanals 16
- und der den Riegelstumpf 12 führenden Innenbreite B des Kanals 16
   maximal 1,5 beträgt.

### Bezugszeichenliste

- 1: Runge
- 2: Bordwand
- 2a: Bordwand
- 2b: Bordwand
- 3: Riegelspannverschluss
- 4: Ladeboden
- 5: Handhebel
- 6: Gehäuse, Einbauwanne
- 7: Nietloch
- 8: Reifen
- 9: Handgriff
- 10: Riegel
- 11: Eingriffsteil
- 11a: Stange
- 12: Riegelstumpf
- 13: Gelenkhebel
- 14: Achse/Achsstummel
- 15: Mulde
- 16: Kanal
- 17: Boden des Kanals
- 18: Achse des Handhebels
- 21: Achse des ersten Drehlagers, erstes Drehlager
- 22: zweites Drehlager
- 23: Bolzen
- 24: Langloch
- 25: Druckfeder
- 26: Trägerplatte
- 27: Niet
- 29: Kanalseitenwand
- 30: Druckfeder
- 31: Federende
- 32: Federende
- 35: Abstützung
- 36: Lasche
- 36A: Abschnitt der Lasche
- 36B: Abschnitt der Lasche
- 37: Hülse
- 38: Endabschnitt
- 39: Abstützung
- 40: Sperrhebel
- 41: Sperrlasche
- 45: Mulde
- 46: Ausnehmung
- 48: Kante

- A: Achse
- B: Innenbreite des Kanals
- L: Abstand

## Patentansprüche

1. Riegelspannverschluss für Türen oder Bordwände von Nutzfahrzeugaufbauten, mit einem Gehäuse (6), einem Riegel (10), der sich aus einem der formschlüssigen Verriegelung der Tür bzw. Bordwand dienenden Eingriffsteil (11) und einem in einem an dem Gehäuse (6) ausgebildeten Kanal (16) längsgeführten Riegelstumpf (12) zusammensetzt, einem schwenkbar an dem Gehäuse (6) gelagerten Handhebel (5), welcher in seiner Schließstellung in dem Gehäuse (6) ruht und in seiner Offenstellung gegenüber der Schließstellung verschwenkt ist, einem über ein erstes Drehlager (21) mit dem Riegelstumpf (12) und über ein zweites Drehlager (22) mit dem Handhebel (5) verbundenen Gelenkhebel (13), und einem den Handhebel (5) in dessen maximaler Offenstellung arretierenden Mechanismus, wobei Bestandteil des Mechanismus eine Druckfeder (30) ist, die mit ihrem ersten Ende (31) gegen das Gehäuse (6) und mit ihrem zweiten Ende (32) gegen den Gelenkhebel (13) abgestützt ist, **dadurch gekennzeichnet, dass** sich die Federabstützung (35) für das erste Ende (31) der Druckfeder (30) an einer am Boden (17) des Kanals (16) einstückig angeformten Lasche (36) befindet, und dass die Lasche (36) einen ersten Längsabschnitt (36A), an dem sich die Federabstützung (35) für das erste Ende der Druckfeder (30) befindet, und einen im Vergleich schmaleren zweiten Längsabschnitt (36B) aufweist, welcher sich innen längs der Druckfeder (30) erstreckt.

2. Riegelspannverschluss nach Anspruch 1, **dadurch gekennzeichnet, dass** in der Schließstellung des Riegels (10) das Verhältnis aus
- dem Abstand (L) zwischen dem ersten Drehlager (21) und der dem Eingriffsteil (11) nächstliegenden Kante (48) des Kanals (16)
und
- der den Riegelstumpf (12) führenden Innenbreite (B) des Kanals (16) maximal 1,5 beträgt.

3. Riegelspannverschluss nach Anspruch 1 oder 2, **gekennzeichnet durch** eine solche Anordnung der Lasche (36), dass die Federabstützung (35) im Vergleich zum Boden (17) des Kanals (16) zu dem Kanalinneren hin vorsteht.

4. Riegelspannverschluss nach einem der Ansprüche 1 bis 3, **dadurch gekennzeichnet, dass** die Federabstützung (35) zu der Achse (21) des ersten Drehlagers hin gerichtet ist.

5. Riegelspannverschluss nach einem der Ansprüche 3 oder 4, **dadurch gekennzeichnet, dass** sich die Federabstützung (39) für das zweite Ende (32) der Druckfeder (30) an einem radial verdickten Endabschnitt (38) einer Hülse (37) befindet, welche längsverschieblich auf der Lasche (36) angeordnet ist.

6. Riegelspannverschluss nach Anspruch 5, **dadurch gekennzeichnet, dass** der Endabschnitt (38) der Hülse (37) gegen eine Mulde (45) innen an dem Gelenkhebel (13) anliegt.

7. Riegelspannverschluss nach einem der vorangehenden Ansprüche, **dadurch gekennzeichnet, dass** der Gelenkhebel (13) zur Aufnahme zumindest eines Teils der Druckfeder (30) mit einer Ausnehmung (46) versehen ist.

## Claims

1. Bar lock for doors or sides of utility vehicle superstructures, with a housing (6), a bar (10) composed of an engagement part (11) serving for the form-fitting locking of the door or side and a bar stub (12) guided longitudinally in a channel (16) formed on the housing (6), a hand lever (5) which is mounted pivotably on the housing (6), rests in its closed position in the housing (6) and, in its open position, is pivoted in relation to the closed position, an articulated lever (13) which is connected to the bar stub (12) via a first rotary bearing (21) and is connected to the hand lever (5) via a second rotary bearing (22), and a mechanism arresting the hand lever (5) in the maximum open position thereof, wherein part of the mechanism is a compression spring (30) which is supported at its first end (31) against the housing (6) and at its second end (32) against the articulated lever (13), **characterized in that** the spring support (35) for the first end (31) of the compression spring (30) is located on a tab (36) that is integrally formed on the base (17) of the channel (16), and **in that** the tab (36) has a first longitudinal portion (36A), on which the spring support (35) for the first end of the compression spring (30) is located, and a second longitudinal portion (36B) which is narrower in comparison and extends in the inside along the compression spring (30).

2. Bar lock according to Claim 1, **characterized in that**, in the closed position of the lock (10), the ratio of
- the distance (L) between the first rotary bearing (21) and the edge (48) of the channel (16) closest to the engagement part (11)
and
- the inner width (B) of the channel (16) leading to the bar stub (12)
is at maximum 1.5.

3. Bar lock according to Claim 1 or 2, **characterized by** such an arrangement of the tab (36) that the spring support (35) in comparison to the base (17) of the channel (16) protrudes towards the channel interior.

4. Bar lock according to one of Claims 1 to 3, **characterized in that** the spring support (35) is directed towards the axis (21) of the first rotary bearing.

5. Bar lock according to either of Claims 3 and 4, **characterized in that** the spring support (39) for the second end (32) of the compression spring (30) is located on a radially thickened end portion (38) of a sleeve (37) which is arranged in a longitudinally displaceable manner on the tab (36).

6. Bar lock according to Claim 5, **characterized in that** the end portion (38) of the sleeve (37) lies against a trough (45) on the inside of the articulated lever (13) .

7. Bar lock according to one of the preceding claims, **characterized in that** the articulated lever (13) is provided with a recess (46) for receiving at least part of the compression spring (30).

## Revendications

1. Fermeture de serrage à verrou pour portes ou ridelles de carrosseries de véhicule utilitaire, comprenant un boîtier (6), un verrou (10) composé d'une pièce de mise en prise (11) servant au verrouillage par complémentarité de forme de la porte ou de la ridelle et d'un tronc de verrou (12) guidé longitudinalement dans un passage (16) réalisé sur le boîtier (6), un levier à main (5) monté pivotant sur le boîtier (6) qui repose dans le boîtier (6) dans sa position de fermeture et est amené à pivoter par rapport à la position de fermeture dans sa position ouverte, un levier articulé (13) relié au tronc de verrou (12) par l'intermédiaire d'un premier coussinet de pivotement (21) et relié au levier à main (5) par l'intermédiaire d'un deuxième coussinet de pivotement (22), et un mécanisme arrêtant le levier à main (5) dans sa position ouverte maximale, un ressort de compression (30) faisant partie du mécanisme et prenant appui par sa première extrémité (31) sur le boîtier (6) et par sa deuxième extrémité (32) sur le levier articulé (13), **caractérisée en ce que** l'appui de ressort (35) pour la première extrémité (31) du ressort de compression (30) se trouve au niveau d'une patte (36) rapportée intégralement au fond (17) du passage (16), et **en ce que** la patte (36) présente une première partie longitudinale (36A) sur laquelle se trouve l'appui de ressort (35) pour la première extrémité du ressort de compression (30), et présente une deuxième partie longitudinale (36B) comparativement plus fine qui s'étend à l'intérieur le long du ressort de compression (30) .

2. Fermeture de serrage à verrou selon la revendication 1, **caractérisée en ce que** dans la position de fermeture du verrou (10), le rapport entre
- la distance (L) entre le premier coussinet de pivotement (21) et l'arête (48) la plus proche de la pièce de mise en prise (11) du passage (16)
et
- la largeur intérieure (B) du passage (16) guidant le tronc de verrou (12)
est de 1,5 au maximum.

3. Fermeture de serrage à verrou selon la revendication 1 ou 2, **caractérisée par** un agencement de la patte (36) tel que l'appui de ressort (35) fait saillie vers l'intérieur du passage en comparaison avec le fond (17) du passage (16).

4. Fermeture de serrage à verrou selon l'une quelconque des revendications 1 à 3, **caractérisée en ce que** l'appui de ressort (35) est tourné vers l'axe (21) du premier coussinet de pivotement.

5. Fermeture de serrage à verrou selon l'une quelconque des revendications 3 ou 4, **caractérisée en ce que** l'appui de ressort (39) pour la deuxième extrémité (32) du ressort de compression (30) se trouve au niveau d'une partie d'extrémité radialement épaissie (38) d'une douille (37) qui est disposée sur la patte (36) de manière mobile en longueur.

6. Fermeture de serrage à verrou selon la revendication 5, **caractérisée en ce que** la partie d'extrémité (38) de la douille (37) est adjacente à un creux (45) à l'intérieur du levier articulé (13).

7. Fermeture de serrage à verrou selon l'une quelconque des revendications précédentes, **caractérisée en ce que** le levier articulé (13) est muni d'un évidement (46) pour recevoir au moins une partie du ressort de compression (30).
